# FASCICULE DE BREVET EUROPEEN

(11) **EP 4 031 603 B1**
(45) Date de publication et mention de la délivrance du brevet: **21.12.2022**
(21) Numéro de dépôt: 20793383.9
(22) Date de dépôt: 23.10.2020
(51) Int. Cl.: C08J 3/00, C08J 3/07, C08L 33/14, C08L 33/24, C08L 39/02, C08L 39/04, C11D 1/00, C08F 2/10, C08F 2/32, C08F 220/34, C08F 220/56, C08F 226/04, C08F 226/06, C11D 1/48, C11D 1/88, C11D 9/22

(54) **PROCEDE DE PREPARATION D'UNE EMULSION INVERSE COMPRENANT DEUX POLYMERES CATIONIQUES**
VERFAHREN ZUR HERSTELLUNG EINER INVERSEN EMULSION, DIE ZWEI KATIONISCHE POLYMERE ENTHÄLT
PROCESS FOR THE PREPARATION OF AN INVERSE EMULSION COMPRISING TWO CATIONIC POLYMERS

(30) Priorité: 19.11.2019 FR 1912918
(43) Date de publication de la demande: 27.07.2022
(73) Titulaire: SPCM SA, 42160 Andrézieux-Bouthéon (FR)
(72) Inventeur: BESSET, Céline, 42160 ANDREZIEUX BOUTHEON (FR); BLONDEL, Frédéric, 42160 ANDREZIEUX BOUTHEON (FR)
(74) Mandataire: Cabinet Laurent & Charras
(86) Numéro de dépôt international: PCT/EP2020/079870
(87) Numéro de publication internationale: WO 2021/099060

(56) Documents cités:
- EP-A2- 0 262 945
- GB-A- 845 573
- US-B2- 8 633 278

## Description

### DOMAINE TECHNIQUE DE L'INVENTION

La présente invention concerne un procédé de préparation d'une émulsion inverse comprenant deux (co)polymères. Le procédé selon l'invention permet d'obtenir une émulsion inverse facile à manipuler et permettant d'apporter un bénéfice au consommateur dans le domaine des produits pour la détergence et la cosmétique (dénommés « *Home and Personal Care »* en anglais).

### ETAT ANTERIEUR DE LA TECHNIQUE

Dans les formulations de compositions détergentes ou cosmétiques, il est souvent utilisé au moins deux polymères comportant chacun une charge cationique. Ces polymères peuvent servir d'épaississant, d'aide au dépôt d'actif ou encore être utilisés pour leurs propriétés conditionnantes (amélioration de la douceur et baisse de l'adhérence statique). Ces polymères possèdent souvent de hautes masses moléculaires et présentent une viscosité apparente élevée en solution dans l'eau.

Un problème rencontré par les formulateurs provient du fait que, lorsqu'au moins deux polymères cationiques sont utilisés dans la formulation de ces compositions, ils sont souvent incompatibles entre eux. En effet, ces polymères étant présents en vue d'utilisations différentes, ils ne possèdent généralement pas la même chimie, ce qui conduit à un certain degré d'incompatibilité. Le mélange direct de tels polymères cationiques, préparés indépendamment l'un de l'autre par polymérisation de monomères, n'est donc pas homogène. En fonction du type de polymérisation, on observe des phénomènes de déphasage, de floculation ou de précipitation. Par conséquent, l'incorporation de ces polymères dans les formulations de compositions doit se faire séparément.

Le formulateur connait également des difficultés de mise en œuvre de ces polymères que ce soit pour le dépotage, le stockage et le dosage de ces derniers dans des formulations souvent fabriquées en procédé continu.

Le document EP 0 262 945 décrit la formation d'un mélange homogène de deux polymères solubles dans l'eau, préparés selon un procédé spécifique comprenant la formation d'un premier polymère par polymérisation de ses monomères de départ dans une solution aqueuse contenant un second polymère préalablement préparé. Ce mélange de polymères trouve des applications dans la fabrication du papier ou dans le traitement de l'eau potable ou minière ou encore en tant que fixateur de couleur dans le textile.

Le document US 8,633,278 décrit une émulsion inverse bimoléculaire de polymères cationiques, où les monomères du second polymère cationique sont polymérisés en présence d'un premier polymère cationique. Les inventeurs observent un effet synergétique obtenu uniquement par la polymérisation du second polymère cationique en présence d'un premier polymère cationique, permettant d'obtenir de meilleures performances des polymères pour la fabrication de papier ou le traitement de l'eau.

Le document US 2002/0188040 décrit un complexe de polymères solubles dans l'eau obtenus à partir d'un premier polymère soluble dans l'eau et d'un ou plusieurs monomères solubles dans l'eau et polymérisés en présence du premier polymère. Le complexe ainsi obtenu est soluble dans l'eau et ne contient pas de particules de polymères insolubles. Ce complexe peut être utilisé dans le traitement de l'eau, pour la fabrication de papier ou comme modificateur rhéologique lorsqu'il est ajouté dans une solution aqueuse, notamment pour des applications dans la fabrication d'encre, de peinture, ou encore d'adhésif.

Les documents EP 0 262 945, US 8,633,278 et US2002/0188040 ne décrivent pas de mélanges de polymères. Au contraire, le document US 8,633,278 précise qu'un effet de synergie est obtenu grâce à un système de polymère bimoléculaire.

Le document GB 845,573 décrit une dispersion aqueuse de polyamide et son utilisation pour recouvrir des surfaces (bois, métal, papier, textile...). Cette dispersion est préparée par formation, après séchage, d'un film clair et imperméable à l'huile et à l'eau. Il ne s'agit pas d'une émulsion, et encore moins d'une émulsion inverse, contenant des polymères hydrosolubles.

Le document EP 0 819 651 décrit une composition pour déshydrater les boues, obtenue (i) en formant une solution aqueuse de monomères non ioniques, de monomères cationiques et d'un polymère cationique, l'ensemble étant soluble dans l'eau, (ii) en émulsifiant la solution aqueuse dans une quantité suffisante d'huile d'hydrocarbure pour former une émulsion eau dans huile, et (iii) en polymérisant les monomères.

Quoi qu'il en soit, il existe un besoin d'obtenir des mélanges de polymères stables et de faciliter la manipulation de ces produits visqueux et difficiles à manipuler, utilisés pour les compositions détergentes et cosmétiques, tout en conservant les propriétés non altérées de ces polymères.

La Demanderesse a découvert, de manière surprenante, que le procédé selon l'invention, permet, outre de répondre aux besoins actuels des formulateurs (faciliter la manipulation de polymères visqueux), d'obtenir des polymères offrant de meilleures performances que s'ils sont additionnés séparément dans la composition détergente ou cosmétique.

### EXPOSE DE L'INVENTION

La présente invention concerne un procédé de préparation d'une émulsion inverse EMI 1 comprenant l'étape suivante :
formation d'une émulsion inverse EMI 1 par mélange d'une solution aqueuse de (co)polymère hydrosoluble A d'au moins un monomère cationique et d'une émulsion inverse EMI 2 de (co)polymère hydrosoluble B d'au moins un monomère cationique.

Un autre objet de l'invention concerne une composition détergente ou cosmétique ou assouplissante (pour le textile), comprenant une émulsion inverse (EMI 1 ou EMI 3) obtenue par le procédé selon l'invention.

Un autre objet de l'invention concerne l'utilisation d'une émulsion inverse (EMI 1 ou EMI 3) obtenue par le procédé selon l'invention pour améliorer les propriétés assouplissantes d'une composition assouplissante pour textile.

Font également partie de l'invention, toutes les combinaisons possibles entre les différents modes de réalisation divulgués, qu'il s'agisse de modes de réalisation préférés ou donnés à titre d'exemple. En outre, lorsque des plages de valeurs sont indiquées, les bornes font partie de ces plages. La divulgation inclut également toutes les combinaisons entre les bornes de ces plages de valeurs. Par exemple, les plages de valeurs « 1-20, préférentiellement 5-15 », impliquent la divulgation des plages 1-5, 1-15, 5-20 et 15-20.

La présente invention permet de diminuer la viscosité d'une composition de (co)polymères par rapport à une solution aqueuse contenant la même quantité de ces (co)polymères. La présente invention permet donc de faciliter l'utilisation de (co)polymères visqueux, notamment en termes de transport de ces (co)polymères dans une canalisation ou d'entretien de ces canalisations. En outre, la réduction de la viscosité entraine un gain d'énergie, le transport des (co)polymères étant facilité et nécessitant des pompes moins puissantes. Le procédé selon l'invention s'avère également plus facile à mettre en œuvre que la formation d'un (co)polymère par polymérisation de monomères en présence d'un autre (co)polymère.

### Les (co)polymères hydrosolubles A et B

Le terme « (co)polymère » désigne un homopolymère ou un copolymère.

Les (co)polymères hydrosolubles A et B peuvent être différents ou identiques, mais leur forme est différente. En effet, le (co)polymère hydrosoluble A est sous la forme d'une solution aqueuse alors que le (co)polymère hydrosoluble B est sous la forme d'une émulsion inverse eau dans huile. Le (co)polymère A est préférentiellement différent du (co)polymère hydrosoluble B. Plus précisément, lorsqu'ils sont différents, les (co)polymères hydrosolubles A et B ne possèdent pas la même composition monomérique et/ou la même masse molaire. Préférentiellement, les (co)polymères hydrosolubles A et B sont deux (co)polymères distincts.

Par (co)polymère hydrosoluble, on entend un (co)polymère qui donne une solution aqueuse sans particule insoluble lorsqu'il est dissous sous agitation à 25°C et avec une concentration de 10 g.l⁻¹ dans l'eau.

Les (co)polymères A et B étant hydrosolubles, ils sont dans la phase aqueuse des émulsions inverses EMI 1 et EMI 3.

Les (co)polymères hydrosolubles A et B peuvent être des (co)polymères synthétiques ou semi-synthétiques. De préférence, les (co)polymères hydrosolubles A et B sont des (co)polymères synthétiques.

Par (co)polymères semi-synthétiques on entend un (co)polymère naturel ayant subi des réactions chimiques de greffage de différents substituants synthétiques. L'homme du métier connait ce genre de réactions qui restent des réactions chimiques classiques appliquées à des polymères naturels.

Les (co)polymères hydrosolubles A et B sont des (co)polymères obtenus, indépendamment l'un de l'autre, à partir d'au moins un monomère cationique et optionnellement d'au moins un monomère non ionique et/ou d'au moins un monomère anionique.

Par « A et/ou B », on entend selon l'invention « A, ou B, ou A et B ».

Par « indépendamment l'un de l'autre », on entend selon l'invention que la préparation d'un de ces (co)polymères est réalisée de façon indépendante de la préparation de l'autre de ces (co)polymères.

Le ou les monomères cationiques pouvant être utilisés dans le cadre de l'invention sont préférentiellement choisis parmi, notamment, les monomères vinyliques, plus particulièrement du type acrylamide, acrylique, allylique ou maléique possédant une fonction ammonium quaternaire. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), le chlorure de méthacrylamido propyltriméthyl ammonium (MAPTAC) et leurs mélanges.

L'homme du métier saura préparer les monomères quaternisés, par exemple au moyen d'halogénure d'alkyle de type R-X, R étant un groupement alkyle et X étant un halogène (notamment le chlorure de méthyle). En outre, la présente invention couvre également les monomères de type DADMAC, APTAC et MAPTAC dont le contre-ion halogénure est le fluorure, le bromure ou l'iodure à la place du chlorure.

Préférentiellement, le ou les monomères cationiques pouvant être utilisés dans le cadre de l'invention sont choisis parmi l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), le chlorure de méthacrylamido propyltriméthyl ammonium (MAPTAC), et leurs mélanges.

Plus préférentiellement, le monomère cationique utilisé pour former le (co)polymère hydrosoluble A est le chlorure de diméthyldiallylammonium (DADMAC).

Plus préférentiellement, le monomère cationique utilisé pour former le (co)polymère hydrosoluble B est le méthacrylate de diméthylaminoéthyle (MADAME) quaternisé.

De manière avantageuse, la teneur en monomère cationique utilisé pour former le (co)polymère hydrosoluble A est comprise entre 1 et 100% massique par rapport à la masse totale de monomères constituant le (co)polymère hydrosoluble A. Ainsi, elle peut être d'au moins 2% massique, par exemple au moins 5% massique, par exemple au moins 10% massique, par exemple au moins 15% massique, par exemple au moins 20% massique, par exemple au moins 30% massique, par exemple au moins 40% massique, par exemple au moins 50% massique. Préférentiellement, elle est inférieure ou égale à 99% massique, par exemple inférieure ou égale à 98% massique, par exemple inférieure ou égale à 95% massique, par exemple inférieure ou égale à 90% massique, par exemple inférieure ou égale à 85% massique, par exemple inférieure ou égale à 80% massique, par exemple inférieure ou égale à 70% massique, par exemple inférieure ou égale à 60% massique.

De manière avantageuse, la teneur en monomère cationique utilisé pour former le (co)polymère hydrosoluble B est comprise entre 1 et 100 % massique par rapport à la masse totale de monomères constituant le (co)polymère hydrosoluble B. Préférentiellement, elle est d'au moins 2% massique, par exemple au moins 5% massique, par exemple au moins 10% massique, par exemple au moins 15% massique, par exemple au moins 20% massique, par exemple au moins 30% massique, par exemple au moins 40% massique, par exemple au moins 50% massique. Préférentiellement, elle est inférieure ou égale à 99% massique, par exemple inférieure ou égale à 98% massique, par exemple inférieure ou égale à 95% massique, par exemple inférieure ou égale à 90% massique, par exemple inférieure ou égale à 85% massique, par exemple inférieure ou égale à 80% massique, par exemple inférieure ou égale à 70% massique, par exemple inférieure ou égale à 60% massique.

Le ou les monomères non ioniques pouvant être utilisés dans le cadre de l'invention sont généralement choisis parmi les monomères vinyliques solubles dans l'eau. Des monomères préférés appartenant à cette famille sont, par exemple, l'acrylamide, le méthacrylamide, le N-isopropylacrylamide, le N,N-diméthylacrylamide, le N-méthylolacrylamide, la N-vinylformamide, le N-vinyl acétamide, la N-vinylpyridine, la N-vinylpyrrolidone, l'acryloyl morpholine (ACMO), la diacétone acrylamide, et leurs mélanges.

Préférentiellement, le ou les monomères non ioniques pouvant être utilisés dans le cadre de l'invention sont choisis parmi le méthacrylamide et l'acrylamide, encore plus préférentiellement l'acrylamide.

De manière avantageuse, la teneur en monomère non ionique utilisé pour former le (co)polymère hydrosoluble A est comprise entre 0 et 99 % massique par rapport à la masse totale de monomères constituant le (co)polymère hydrosoluble A. Préférentiellement, elle est d'au moins 1% massique, par exemple au moins 2% massique, par exemple au moins 5% massique, par exemple au moins 10% massique, par exemple au moins 15% massique, par exemple au moins 20% massique, par exemple au moins 30% massique, par exemple au moins 40% massique, par exemple au moins 50% massique. Préférentiellement, elle est inférieure ou égale à 98% massique, par exemple inférieure ou égale à 95% massique, par exemple inférieure ou égale à 90% massique, par exemple inférieure ou égale à 85% massique, par exemple inférieure ou égale à 80% massique, par exemple inférieure ou égale à 70% massique, par exemple inférieure ou égale à 60% massique.

Selon l'invention, on parle de monomère(s) constituant un (co)polymère et non d'unité monomérique (qui est la brique constitutive du (co)polymère) par souci de clarté. Ainsi qu'il est connu de l'homme du métier, l'unité monomérique est directement issue du monomère par réaction polymérique. Le monomère est donc soit le composé de départ de la polymérisation, soit l'unité présente dans le (co)polymère.

De manière avantageuse, la teneur en monomère non ionique utilisée pour former le (co)polymère hydrosoluble B est comprise entre 0 et 99 % massique par rapport à la masse totale de monomères constituant le (co)polymère hydrosoluble B. Préférentiellement, elle est d'au moins 1% massique, par exemple au moins 2% massique, par exemple au moins 5% massique, par exemple au moins 10% massique, par exemple au moins 15% massique, par exemple au moins 20% massique, par exemple au moins 30% massique, par exemple au moins 40% massique, par exemple au moins 50% massique. Préférentiellement, elle est inférieure ou égale à 98% massique, par exemple inférieure ou égale à 95% massique, par exemple inférieure ou égale à 90% massique, par exemple inférieure ou égale à 85% massique, par exemple inférieure ou égale à 80% massique, par exemple inférieure ou égale à 70% massique, par exemple inférieure ou égale à 60% massique.

Les quantités de monomère(s) seront ajustées par l'homme du métier afin de ne pas dépasser 100% massique lors de la préparation des (co)polymères hydrosolubles selon l'invention.

Le ou les monomères anioniques pouvant être utilisés dans le cadre de l'invention sont préférentiellement choisis parmi l'acide acrylique, l'acide méthacrylique, l'acide itaconique, l'acide maléique, les dérivés sulfonés de l'acide (méth)acrylique par exemple l'acide 2-acrylamido-2-méthylpropane sulfonique (ATBS), l'acide vinylsulphonique, l'acide vinylphosphonique, et leurs mélanges, ledit monomère anionique étant non salifié, partiellement ou totalement salifié, et les sels du méthacrylate de 3-sulpropyle.

La forme salifiée correspond avantageusement aux sels de métaux alcalins (Li, Na, K...), de métaux alcalino-terreux (Ca, Mg...) ou d'ammonium, notamment les ammonium quaternaires. Les sels préférés sont les sels de sodium. La forme non salifiée correspond à la forme acide du monomère anionique, par exemple CH₂=CH-C(=O)OH dans le cas de l'acide acrylique.

Préférentiellement, le ou les monomères anioniques pouvant être utilisés dans le cadre de l'invention sont choisis parmi l'acide (méth)acrylique, l'acide 2-acrylamido-2-méthylpropane sulfonique (ATBS), ledit monomère anionique étant non salifié, partiellement ou totalement salifié. Encore plus préférentiellement, le monomère anionique utilisé dans le cadre de l'invention est l'acide acrylique non salifié, partiellement ou totalement salifié.

De manière avantageuse, la teneur en monomère anionique utiliser pour former le (co)polymère hydrosoluble A est comprise entre 0 et 99 % massique par rapport à la masse totale de monomères constituant le (co)polymère hydrosoluble A. Préférentiellement, elle est d'au moins 1% massique, par exemple au moins 2% massique, par exemple au moins 5% massique, par exemple au moins 10% massique, par exemple au moins 15% massique, par exemple au moins 20% massique, par exemple au moins 30% massique, par exemple au moins 40% massique, par exemple au moins 50% massique. Préférentiellement, elle est inférieure ou égale à 98% massique, par exemple inférieure ou égale à 95% massique, par exemple inférieure ou égale à 90% massique, par exemple inférieure ou égale à 85% massique, par exemple inférieure ou égale à 80% massique, par exemple inférieure ou égale à 70% massique, par exemple inférieure ou égale à 60% massique.

De manière avantageuse, la teneur en monomère anionique utilisé pour former le (co)polymère hydrosoluble B est comprise entre 0 et 99 % massique par rapport à la masse totale de monomères constituant le (co)polymère hydrosoluble B. Préférentiellement, elle est d'au moins 1% massique, par exemple au moins 2% massique, par exemple au moins 5% massique, par exemple au moins 10% massique, par exemple au moins 15% massique, par exemple au moins 20% massique, par exemple au moins 30% massique, par exemple'au moins 40% massique, par exemple au moins 50% massique. Préférentiellement, elle est inférieure ou égale à 98% massique, par exemple inférieure ou égale à 95% massique, par exemple inférieure ou égale à 90% massique, par exemple inférieure ou égale à 85% massique, par exemple inférieure ou égale à 80% massique, par exemple inférieure ou égale à 70% massique, par exemple inférieure ou égale à 60% massique.

Comme déjà indiqué, les quantités des différents monomère(s) seront ajustées par l'homme du métier afin de ne pas dépasser 100% massique lors de la préparation des (co)polymères hydrosolubles selon l'invention.

Selon un mode particulier de l'invention, le caractère anionique des (co)polymères hydrosolubles A et B peut être obtenu par post hydrolyse. La post hydrolyse correspond à une réaction du (co)polymère après sa formation par polymérisation des monomères. Cette étape consiste en la réaction de groupes fonctionnels hydrolysables de monomères, avantageusement de monomères non ioniques, plus avantageusement de monomères contenant une fonction hydrolysable amide ou ester, avec un agent d'hydrolyse. Cet agent d'hydrolyse peut notamment être une enzyme, une résine échangeuse d'ion, ou un métal alcalin. Préférentiellement, l'agent d'hydrolyse est une base de Brönsted, par exemple NaOH ou KOH. Durant cette étape de post-hydrolyse du (co)polymère, le nombre de fonctions acide carboxylique augmente. En effet, la réaction entre la base et les fonctions amides ou esters présentes dans le (co)polymère produit des groupes carboxylates. L'hydrolyse peut être partielle ou totale.

Selon certains modes de réalisation, en plus des monomères ci-dessus, les (co)polymères hydrosolubles A et B peuvent également comprendre un ou plusieurs monomères hydrophobes choisis, notamment, parmi les monomères vinyliques, plus particulièrement de type acrylamide, acrylique, allylique ou maléique possédant une fonction hydrophobe pendante. Ces monomères hydrophobes sont choisis préférentiellement parmi les dérivés de l'acrylamide comme les N-alkylacrylamides, par exemple le diacétone acrylamide, le N-tert-butylacrylamide, l'octylacrylamide ; les N,N-dialkylacrylamides comme le N,N-dihexylacrylamide ; et les dérivés d'acide acrylique comme les alkyl acrylates et méthacrylates et leurs mélanges. Préférentiellement, ils sont choisis parmi les esters de l'acide (méth)acrylique présentant une chaîne alkyle, arylalkyle, propoxylée, éthoxylée, ou éthoxylée et propoxylée ; les dérivés du (méth)acrylamide présentant une chaîne alkyle, arylalkyle propoxylée, éthoxylée, éthoxylée et propoxylée, ou dialkyle ; les alkyl aryl sulfonates. Les groupements alkyles, aryles et alkyl aryles sont avantageusement, et indépendamment l'un de l'autre, des groupements hydrocarbonés comprenant entre 1 et 10 atomes de carbone.

De manière avantageuse, les (co)polymères A et B comprennent, indépendamment l'un de l'autre, moins de 10% % massique de monomère hydrophobe par rapport à la masse totale de monomères constituant le (co)polymère hydrosoluble A ou B, plus avantageusement entre 0,01 et 5 % massique.

Lorsque les (co)polymères A et B comprennent des monomères hydrophobe, l'homme du métier saura ajuster les quantités des différents monomères afin d'obtenir les propriétés souhaitées tout en maintenant l'hydrosolubilité des (co)polymères.

Des monomères présentant un caractère zwitterionique peuvent également être utilisés dans l'invention. Le monomère zwitterionique peut être un dérivé d'un motif de type vinylique, avantageusement acrylamide, acrylique, allylique ou maléique possédant une fonction amine ou ammonium quaternaire et une fonction acide de type carboxylique (ou carboxylate), sulfonique (ou sulfonate) ou phosphorique (ou phosphate). On peut citer, en particulier et de façon non limitative les dérivés de l'acrylate de diméthylaminoéthyl, tel que le 2-((2-(acryloyloxy)éthyl) diméthylammonio) éthane-1-sulfonate, le 3-((2-(acryloyloxy)éthyl) diméthylammonio) propane-1-sulfonate, le 4-((2-(acryloyloxy)éthyl) diméthylammonio) butane-1-sulfonate, le [2-(acryloyloxy)éthyl] (diméthylammonio) acétate, les dérivés du méthacrylate de diméthylaminoéthyle tel que le 2-((2-(méthacryloyloxy) éthyl) diméthylammonio) éthane-1-sulfonate, le 3-((2-(méthacryloyloxy) éthyl) diméthylammonio) propane-1-sulfonate, le 4-((2-(méthacryloyloxy) éthyl) diméthylammonio) butane-1-sulfonate, le [2-(méthacryloyloxy)éthyl)] (diméthylammonio) acétate, les dérivés du diméthylamino propylacrylamide tel que le 2-((3-acrylamidopropyl) diméthylammonio) éthane-1-sulfonate, le 3-((3-acrylamidopropyl) diméthylammonio) propane-1-sulfonate, le 4-((3-acrylamidopropyl) diméthylammonio) butane-1-sulfonate, le [3-(acryloyloxy) propyl] (diméthylammonio) acétate, les dérivés du diméthylamino propyl méthylacrylamide tel que le 2-((3-méthacrylamidopropyl) diméthylammonio) éthane-1-sulfonate, le 3-((3-méthacrylamidopropyl) diméthylammonio) propane-1-sulfonate, le 4-((3-méthacrylamidopropyl) diméthylammonio) butane-1-sulfonate et le [3-(méthacryloyloxy)propyl] (diméthylammonio) acétate.

Selon un mode de réalisation préféré de l'invention, le (co)polymère hydrosoluble A est un (co)polymère hydrosoluble synthétisé à partir d'au moins un monomère cationique et d'au moins un monomère anionique, le (co)polymère hydrosoluble A ayant une charge globale cationique.

Selon un mode de réalisation préféré de l'invention, le (co)polymère hydrosoluble B est un (co)polymère hydrosoluble réticulé.

Selon un mode particulier de l'invention, les (co)polymères hydrosolubles A et B ont, indépendamment l'un de l'autre, une masse molaire moyenne en masse comprise entre 50 000 g/mol et 5 000 000 g/mol, préférentiellement entre 100 000 g/mol et 3 000 000 g/mol.

La masse mollaire moyenne en masse est avantageusement déterminée par chromatographie en phase liquide à haute performance (souvent connue sous son acronyme HPLC en anglais pour « *high performance liquid chromatography »),* par exemple au moyen des instruments et du protocole suivants :
^{∗} Système Chromatographique : chromatographie liquide Agilent 1260 ou équivalent
^{∗} Détecteurs :
   - UV double longueur d'onde 1260 ou équivalent
   - Wyatt Dawn Heleos II : diffusion de lumière 18 angles (MALS)
   - Wyatt ViscoStar II : viscosimètre
   - Wyatt T-Rex ou équivalent : Indice de réfraction
^{∗} Colonnes chromatographiques :
   - Shodex OHpak SB-807 HQ^{∗}35 µm
   - Shodex OHpak SB-805 HQ^{∗}13 µm
   - Shodex OHpak SB-803 HQ^{∗}6 µm
   - Shodex OHpak SB-802 HQ^{∗} 8 µm
^{∗} Méthode :
   - Température : 25°C
   - Phase mobile : 0.4M NaNO₃ + 100ppm NaN₃, TFA 0.05% (pH = 3.5)
   - Injection : 100µL
   - Débit : 0.5 ml/min
   - Détection : Dawn HELEOS (MALS), Optilab T-Rex (RI)

De manière générale, la formation du (co)polymère hydrosoluble A ne nécessite pas de procédé de polymérisation particulier. Il peut être obtenu par toutes les techniques de polymérisation bien connues de l'homme du métier résultant en un (co)polymère avantageusement sous forme de poudre : polymérisation en gel suivie d'étapes de séchage et broyage ; polymérisation par précipitation ; polymérisation en solution, suivie d'une étape de séchage, avantageusement par pulvérisation *(ou « spray drying »* en anglais) ; polymérisation en suspension inverse, avantageusement pour l'obtention de microbilles ; polymérisation micellaire suivie ou non d'une étape de précipitation ; polymérisation post-hydrolyse ou co-hydrolyse ; polymérisation dite « template », radicalaire, ou encore radicalaire contrôlée, et plus particulièrement de type RAFT (acronyme anglais de *« Reversible Addition Fragmentation Chain Transfert »).*

La polymérisation est généralement une polymérisation à radicaux libres. Par « polymérisation par radicaux libres », on entend selon l'invention une polymérisation par radicaux libres au moyen d'au moins un initiateur UV, azoïque, redox ou thermiques ou bien une technique de polymérisation radicalaire contrôlée (CRP) ou bien une technique de polymérisation sur matrice.

De manière préférentielle, le (co)polymère hydrosoluble A est obtenu par un procédé de polymérisation en solution.

De préférence, la concentration en (co)polymère hydrosoluble A de la solution aqueuse lorsqu'elle est mélangée à EMI 2 selon le procédé de l'invention, est comprise entre 1 et 70 % massique. Préférentiellement, elle est d'au moins 1% massique, par exemple au moins 2% massique, par exemple au moins 3% massique, par exemple au moins 5% massique, par exemple au moins 10% massique, par exemple au moins 15% massique, par exemple au moins 20% massique, par exemple au moins 30% massique. Préférentiellement, elle est inférieure ou égale à 65% massique, par exemple inférieure ou égale à 60% massique, par exemple inférieure ou égale à 55% massique, par exemple inférieure ou égale à 50% massique, par exemple inférieure ou égale à 40% massique.

Selon un mode particulier de l'invention, préalablement à la formation en solution aqueuse mise en œuvre dans le procédé, le (co)polymère hydrosoluble A peut se présenter sous forme liquide, gel ou solide.

De manière préférentielle, le (co)polymère hydrosoluble B est obtenu par un procédé de polymérisation par émulsion inverse (eau dans huile). Un tel procédé est connu de l'homme du métier. L'expression « émulsion inverse » désigne aussi bien les émulsions inverses que les microémulsions inverses.

Généralement, une solution aqueuse comprenant le ou les monomères et le ou les agents émulsifiants est émulsionnée dans une phase huileuse. Ensuite, la polymérisation est réalisée en ajoutant un initiateur de radicaux libres. On peut faire référence aux couples rédox, avec l'hydroperoxyde de cumène, le butylhydroxyperoxyde tertiaire ou les persulfates parmi les agents oxydants, le sulfite de sodium, le métabisulfite de sodium et le sel de Mohr parmi les agents réducteurs. Des composés azoïques tels que le chlorhydrate de 2,2'-azobis (isobutyronitrile) et de 2,2'-azobis (2-amidinopropane) peuvent également être utilisés.

Classiquement, la polymérisation est généralement effectuée de manière isotherme, adiabatique ou à température contrôlée. C'est-à-dire que la température est maintenue constante, généralement entre 10°C et 60°C (isotherme) ; ou bien on laisse la température augmenter naturellement (adiabatique) et dans ce cas, la réaction est généralement commencée à une température inférieure à 10°C et la température finale est généralement supérieure à 50°C ; ou, enfin, l'augmentation de la température est contrôlée de manière à avoir une courbe de température entre la courbe isotherme et la courbe adiabatique.

L'huile utilisée pour préparer l'émulsion inverse EMI 2 comprenant le (co)polymère hydrosoluble B peut être une huile minérale, une huile végétale, une huile synthétique ou un mélange de plusieurs de ces huiles. Des exemples d'huile minérale sont les huiles minérales contenant des hydrocarbures saturés de type aliphatique, naphténique, paraffinique, isoparaffinique, cycloparaffinique ou naphtyle. Des exemples d'huile synthétique sont le polydécène hydrogéné ou le polyisobutène hydrogéné, un ester tel que le stéarate d'octyle ou l'oléate de butyle. La gamme de produits Exxsol^{®} d'Exxon convient parfaitement.

En général, le ratio massique de la phase eau sur la phase huile pendant la polymérisation est préférentiellement compris entre 50/50 et 90/10, plus préférentiellement entre 70/30 et 80/20.

Selon la présente invention, le terme "agent émulsifiant" désigne un agent capable d'émulsifier de l'eau dans une huile et un "agent inverseur" est un agent capable d'émulsionner une huile dans de l'eau. Plus précisément, on considère qu'un agent inverseur est un tensioactif ayant un équilibre hydrophile-lipophile (HLB) supérieur ou égal à 10, et un agent émulsifiant est un tensioactif ayant un HLB strictement inférieur à 10.

L'équilibre hydrophile-lipophile (HLB) d'un composé chimique est une mesure de son degré d'hydrophilie ou de lipophilie, déterminé en calculant les valeurs des différentes régions de la molécule, comme décrit par Griffin en 1949 (Griffin WC, Classification ofSurface-Active Agents by HLB, Journal of the Society of Cosmetic Chemists, 1949, 1, pages 311-326).

Selon la présente invention, nous avons adopté le procédé de Griffin de calcul d'une valeur basée sur les groupes chimiques de la molécule. Griffin a attribué un nombre sans dimension compris entre 0 et 20 pour donner des informations sur la solubilité dans l'eau et dans l'huile. Les substances ayant une valeur HLB de 10 sont réparties entre les deux phases, de sorte que le groupe hydrophile (masse moléculaire Mh) se projette complètement dans l'eau tandis que le groupe hydrocarboné hydrophobe (masse moléculaire Mp) est adsorbé dans la phase non aqueuse.

La valeur HLB d'une substance de masse moléculaire totale M, d'une partie hydrophile d'une masse moléculaire Mh et d'une partie hydrophobe d'une masse moléculaire Mp est donnée par : HLB = 20 (Mh / Mp).

Comme agent inverseur, on peut citer les esters de sorbitan éthoxylés tels que l'oléate de sorbitan éthoxylé avec 20 équivalents d'oxyde d'éthylène (EO 20), le laurate de sorbitan polyéthoxylé avec 20 équivalents d'oxyde d'éthylène, le polyéthoxylé d'huile de ricin, l'alcool oléodécylique décaéthoxylé, le lauryl alcool heptaméthoxylé et le polyéthoxy monostéarate de sorbitan avec 20 équivalents d'oxyde d'éthylène. L'agent inverseur peut également être le polyoxyéthylène alkylphénol ; le polyoxyéthylène (10 équivalents d'oxyde d'éthylène) éther cétylique ; le polyoxyéthylène alkyl-aryl éther ; les dérivés d'ammonium quaternaire ; l'oléate de potassium ; le N-cétyl-N-éthyl morpholinium éthosulfate ; le lauryl sulfate de sodium ; les produits de condensation des alcools gras supérieurs avec l'oxyde d'éthylène, comme le produit de réaction d'alcool oléyle et 10 équivalents d'oxyde d'éthylène ; des produits de condensation d'alkylphénols et d'oxyde d'éthylène, tels que les produits de réaction de l'isooctylphénol avec 12 équivalents d'oxyde d'éthylène ; des produits de condensation d'amines d'acides gras supérieurs avec cinq équivalents d'oxyde d'éthylène ou plus ; l'oxyde d'éthylène tristérylphénol ; des produits de condensation d'oxyde d'éthylène des esters gras partiellement supérieurs polyoliques, et leurs anhydrides internes (e.g., anhydride de mannitol et anhydride de sorbitol) ; les oxydes d'amines ; les alkylpolyglucosides ; les glucamides ; les esters de phosphates ou les sels d'acides alkylbenzènes sulfoniques ; ou des polymères hydrosolubles tensioactifs.

Préférentiellement, l'agent inverseur est un nonylphénol éthoxylé, de préférence avec une éthoxylation de 4 à 10, ou un alcool éthoxy/propoxylé, de préférence avec une éthoxylation/propoxylation en C12 à C25, ou l'alcool tridécylique éthoxylé, ou un alcool gras éthoxy/propoxylé. De manière avantageuse, l' éthoxylation correspond à 2 à 5 motifs éthoxy alors que l'éthoxylation/propoxylation est avantageusement en C12-C15.

L'émulsion eau dans huile comprend entre 1 et 10% massique d'au moins un agent inverseur, préférentiellement entre 3 à 7 % massique.

De préférence, la concentration en (co)polymère hydrosoluble B dans l'émulsion inverse EMI2 est comprise entre 5 et 50 % massique. Préférentiellement, elle est d'au moins 5% massique, par exemple au moins 7% massique, par exemple au moins 10% massique, par exemple d'au moins 15% massique, par exemple au moins 20% massique, par exemple au moins 25% massique. Préférentiellement, elle est inférieure ou égale à 50% massique, par exemple inférieure ou égale à 45% massique, par exemple inférieure ou égale à 40% massique, par exemple inférieure ou égale à 35% massique, par exemple inférieure ou égale à 30% massique.

Selon un mode particulier de l'invention, le (co)polymère hydrosoluble A possède un caractère amphotère (charges cationiques et anioniques), c'est-à-dire qu'il est préparé à partir d'au moins un monomère cationique et d'au moins un monomère anionique ou d'au moins un monomère non ionique subissant une réaction de post-hydrolyse, et optionnellement d'au moins un autre monomère non ionique. Les monomères constituant le (co)polymère hydrosoluble A sont préférentiellement choisis parmi les listes décrites précédemment.

La charge globale du (co)polymère hydrosoluble A est préférentiellement cationique. Ainsi, le ratio massique entre monomères cationiques et monomères anioniques dans le (co)polymère hydrosoluble A est préférentiellement supérieur à 1. Préférentiellement, le ratio massique entre monomères cationiques et monomères anioniques dans le (co)polymère hydrosoluble A est compris entre 1 et 100, plus préférentiellement entre 2 et 50, plus préférentiellement entre 4 et 30, et plus préférentiellement entre 6 et 20.

Selon un mode préférentiel de l'invention, le (co)polymère hydrosoluble A est un (co)polymère d'acide acrylique non salifié, partiellement ou totalement salifié, et de chlorure de diméthyldiallylammonium (DADMAC).

Préférentiellement, dans le (co)polymère hydrosoluble A, le ratio massique entre le chlorure de diméthyldiallylammonium (DADMAC) et l'acide acrylique non salifié, partiellement ou totalement salifié, est compris entre 1 et 100, plus préférentiellement entre 2 et 50, et encore plus préférentiellement entre 4 et 30.

Selon un mode particulier de l'invention, le (co)polymère hydrosoluble B est un (co)polymère hydrosoluble réticulé.

Le ou les agents réticulants, pouvant être utilisés dans le cadre de l'invention sont avantageusement choisis parmi les monomères à insaturation polyéthylénique ayant au minimum deux fonctions insaturées, comme par exemple les fonctions vinyliques et époxy. Il peut notamment s'agir de fonctions CH=CH (éventuellement susbstituées), de fonctions allyliques ou de fonctions acryliques. On peut citer par exemple le méthylène bis acrylamide (MBA), la triallyamine, ou encore des macroamorceurs tels que les polyperoxydes, polyazoiques et les polyagents de transfert tels que les (co)polymères polymercaptans.

Préférentiellement, la quantité d'agent réticulant est comprise entre 0,001 et 0,15 % massique par rapport à la masse totale de monomères constituant le (co)polymère hydrosoluble B. Plus préférentiellement, elle est comprise entre 0,01 et 0,1 % massique.

Selon un mode préférentiel de l'invention, le (co)polymère hydrosoluble B est un (co)polymère d'acrylamide et de méthacrylate de diméthylaminoéthyle (MADAME) quaternisé (avantageusement avec CH₃Cl).

Préférentiellement, le ratio massique entre le méthacrylate de diméthylaminoéthyle (MADAME) quaternisé (avantageusement avec CH₃Cl) et l'acrylamide est supérieur à 0 et inférieur ou égal à 30, plus préférentiellement entre 5 et 20, et encore plus préférentiellement entre 10 et 15.

Même lorsqu'il est réticulé, le (co)polymère hydrosoluble B reste soluble dans l'eau. L'homme du métier saura ajuster la quantité de réticulant, et éventuellement d'agent de transfert, afin d'arriver à ce résultat.

Selon un mode particulier de l'invention, la charge globale des (co)polymères hydrosolubles A et B est préférentiellement cationique.

### Description du procédé d'obtention de l'émulsion inverse EMI 1

Le procédé selon l'invention consiste à mélanger de manière appropriée une solution aqueuse d'un (co)polymère hydrosoluble A avec une émulsion inverse EMI 2 d'un (co)polymère hydrosoluble B.

En général, le ratio massique de la phase eau sur la phase huile de l'émulsion inverse EMI 1 est préférentiellement compris entre 1 et 6, plus préférentiellement entre 2 et 4.

La nouvelle émulsion inverse EMI 1 formée par le mélange de la solution aqueuse du (co)polymère hydrosoluble A et de l'émulsion inverse du (co)polymère hydrosoluble B ne nécessite généralement pas d'ajout supplémentaire de tensioactif. Néanmoins il est possible d'en ajouter. En outre, il est également envisageable d'ajouter un inverseur, notamment si l'émulsion EMI 1 n'en contient pas.

Le mélange se fait préférentiellement par ajout de la solution aqueuse du (co)polymère hydrosoluble A dans l'émulsion inverse EMI 2 du (co)polymère hydrosoluble B. Mais le mélange peut également se faire par ajout de l'émulsion inverse EMI 2 du (co)polymère hydrosoluble B dans la solution aqueuse du (co)polymère hydrosoluble A. Elle peut également être réalisée par introduction simultanée de la solution aqueuse du (co)polymère hydrosoluble A et de l'émulsion inverse EMI 2 dans un même contenant.

L'ajout (ou le mélange) de la solution aqueuse comprenant le (co)polymère hydrosoluble A dans l'émulsion inverse EMI 2 du (co)polymère B peut se faire en une fois, ou il peut se faire en plusieurs fois (au moins deux fois). Il peut être réalisé de manière continue.

Le mélange de la solution de (co)polymère hydrosoluble A avec l'émulsion inverse EMI 2 de (co)polymère hydrosoluble B peut se faire par tout moyen connu de l'homme du métier. Par exemple et de manière non exhaustive, il peut être réalisé par agitation à l'aide d'un barreau aimanté, d'une pale d'agitation, ou d'une double pale d'agitation. De préférence, l'agitation se fait à l'aide d'une pale d'agitation.

Le temps d'agitation du mélange est généralement compris entre 2 minutes et 60 minutes, préférentiellement il est compris entre 5 minutes et 30 minutes, plus préférentiellement entre 10 minutes et 20 minutes.

La vitesse d'agitation du mélange est préférentiellement comprise entre 10 rpm et 1000 rpm (rpm = rotation par minute), plus préférentiellement entre 100 rpm et 800 rpm, et encore plus préférentiellement entre 400 rpm et 600 rpm. En général, une trop faible agitation ne permet pas la formation d'une nouvelle émulsion inverse EMI 1 alors qu'une agitation trop vigoureuse risque de casser l'émulsion inverse EMI 2 et/ou l'émulsion EMI 1.

La température d'agitation est avantageusement comprise entre 15°C et 65°C. Cette température est avantageusement ajustée en fonction de la nature des (co)polymères A et B. A une température trop élevée ou trop peu élevée, suivant la cationicité du (co)polymère, on peut rencontrer des problèmes de compatibilité entre le (co)polymères A et B comprenant des monomères cationiques, se traduisant par la précipitation d'une partie des (co)polymères A et B. L'homme du métier saura adapter cette température afin d'obtenir un mélange satisfaisant, sans précipitation c'est-à-dire sans formation de particules insolubles à 25°C.

Dans un mode particulier, le ratio massique entre le (co)polymère hydrosoluble B et le (co)polymère hydrosoluble A dans l'émulsion inverse EMI 1 ou EMI 3 est compris entre 1 et 100. Préférentiellement, il est compris entre 2 et 70, plus préférentiellement entre 3 et 50, encore plus préférentiellement entre 4 et 30, et encore plus préférentiellement entre 5 et 14.

Selon un mode particulier de l'invention, la concentration totale en (co)polymères hydrosoluble A et B dans l'émulsion inverse EMI 1 est comprise entre 5 et 50% massique par rapport à la masse totale de l'émulsion inverse EMI 1. Préférentiellement, elle est comprise entre 10 et 40 % massique, plus préférentiellement elle est comprise entre 15 et 35% massique, et plus préférentiellement entre 20 et 30% massique.

L'homme du métier saura adapter les concentrations de (co)polymère hydrosoluble A et de (co)polymère hydrosoluble B (dans l'émulsion EMI 2) de façon à obtenir les concentrations en (co)polymères hydrosolubles A et B souhaitées dans l'émulsion EMI 1 selon l'invention.

Un mode particulier de l'invention concerne un procédé de préparation d'une émulsion inverse EMI 1 comprenant le mélange d'une solution aqueuse comprenant un (co)polymère hydrosoluble A synthétisé à partir d'au moins un monomère cationique et d'au moins un monomère anionique avec de préférence une charge globale cationique, avec une émulsion inverse EMI 2 comprenant un (co)polymère hydrosoluble B réticulé synthétisé à partir d'au moins un monomère cationique. Les (co)polymères hydrosolubles A et B sont préférentiellement distincts l'un de l'autre.

Dans un mode préférentiel, concernant toute sorte d'ajout, le procédé de l'invention comprend en outre une étape subséquente de concentration, avantageusement par distillation, de l'émulsion inverse EMI 1. Cette étape de concentration consiste à éliminer au moins une partie de l'eau et/ou de l'huile de l'émulsion EMI 1.

Ainsi, un mode préférentiel de l'invention concerne un procédé de préparation d'une émulsion inverse distillée EMI 3 comprenant les étapes suivantes :
a) Préparation d'une émulsion inverse EMI 1 comprenant le mélange d'une solution aqueuse comprenant un (co)polymère hydrosoluble A synthétisé à partir d'au moins un monomère cationique, avec une émulsion inverse EMI 2 comprenant un (co)polymère hydrosoluble B synthétisé à partir d'au moins un monomère cationique,
   Les (co)polymères hydrosolubles A et B sont préférentiellement distincts l'un de l'autre.
b) Distillation de l'émulsion inverse EMI 1 pour obtenir une émulsion inverse EMI 3.

Par distillation, on entend une élimination partielle de l'eau de la phase hydrophile et/ou de l'huile de l'émulsion formée par le mélange des (co)polymères hydrosolubles A et B. Comme technique d'élimination de l'eau, nous pouvons citer à titre d'exemple la distillation sous pression réduite. Cette distillation peut être continue ou discontinue, avec entrainement azéotropique. Préférentiellement, la distillation est continue et une huile légère (point d'ébullition inférieur à 200°C) est avantageusement utilisée (EMI 2) pour faciliter l'entrainement de l'eau. De manière avantageuse, la formation de l'émulsion EMI 3 ne nécessite pas d'huile additionnelle, l'huile de l'émulsion EMI 3 provenant de l'émulsion EMI 2.

Les émulsions inverses EMI 3 obtenues après distillation sont ainsi concentrées en (co)polymères A et B. On obtient des émulsions inverses EMI 3 dont la concentration en (co)polymères A et B peut être comprise entre 20 et 80% en masse. Préférentiellement, la concentration en masse des (co)polymères A et B, après distillation, est comprise entre 30 et 70% en masse, encore plus préférentiellement entre 35 et 60% en masse, par rapport à la masse de l'émulsion EMI 3.

Un mode particulier de l'invention concerne un procédé de préparation d'une émulsion inverse distillée EMI 3 comprenant les étapes suivantes :
a) Préparation d'une émulsion inverse EMI 1 comprenant le mélange d'une solution aqueuse comprenant un (co)polymère hydrosoluble A synthétisé à partir d'au moins un monomère cationique et d'au moins un monomère anionique, avec de préférence une charge globale cationique, avec une émulsion inverse EMI 2 comprenant un (co)polymère hydrosoluble B réticulé, synthétisé à partir d'au moins un monomère cationique,
   les (co)polymères hydrosolubles A et B étant préférentiellement distincts l'un de l'autre.
b) Distillation de l'émulsion inverse EMI 1 pour obtenir une émulsion inverse EMI 3.

Les conditions de mélange doivent être telles que l'émulsion inverse EMI 1 ne soit pas inversée ou déstabilisée lors du mélange. L'homme du métier saura ajuster ces paramètres pour respecter cette condition.

Toutes les préférences liées aux (co)polymères hydrosolubles A et B précédemment décrites pouvant être ajoutées et combinées au procédé d'obtention de l'émulsion inverse EMI 1 ou de EMI 3 selon l'invention.

### Utilisations et avantages des émulsions inverses EMI 1 et de EMI 3 obtenues selon le procédé de l'invention

Un autre objet de l'invention concerne une composition détergente ou cosmétique ou assouplissante pour le textile comprenant une émulsion inverse EMI 1 ou EMI 3 obtenue selon le procédé de l'invention. L'émulsion EMI 1 comprend le mélange d'une solution aqueuse comprenant un (co)polymère hydrosoluble A d'au moins un monomère cationique, avec une émulsion inverse EMI 2 comprenant un (co)polymère hydrosoluble B d'au moins un monomère cationique. L'émulsion EMI 3 correspond généralement à l'émulsion EMI 1 après une étape de distillation.

Préférentiellement, la composition détergente ou cosmétique ou assouplissante pour le textile est une composition assouplissante. Elle comprend l'émulsion EMI 1 ou EMI 3 sous forme inversée.

Une composition assouplissante est une composition liquide ajoutée, dans une machine à laver, pendant le cycle de rinçage pour rendre les vêtements plus confortables au toucher. Ces produits agissent en déposant des agents conditionnants (esters quaternisés, polymères cationiques...) sur le tissu, le rendant plus doux et réduisant l'adhérence statique.

Typiquement, une composition assouplissante comprend des agents conditionnants et des tensioactifs. Les tensioactifs particulièrement préférés de compositions assouplissantes pour textile sont certains tensioactifs non ioniques, tels que les esters d'acide gras de monoalcools et polyalcools, par exemple le monostéarate de glycérol, le monolaurate de sorbitan et le monooléate de sorbitan.

En plus de ces agents conditionnants et des tensioactifs, les compositions assouplissantes peuvent contenir d'autres ingrédients pour améliorer leur attrait esthétique et assurer la conservation du produit. Par exemple, du parfum ou de la couleur peuvent être ajoutés pour rendre le produit plus agréable aux consommateurs. De plus, des agents de conservation sont souvent utilisés pour assurer la qualité du produit et sa conservation.

La composition assouplissante selon l'invention reste conventionnelle en ce qui concerne les connaissances générales de l'homme du métier. Ce dernier saura adapter les concentrations des différents composants et les différents paramètres pour parvenir à la fabrication de la composition assouplissante.

Préférentiellement, la quantité d'actif (somme des (co)polymères hydrosolubles A et B) utilisée pour des compositions assouplissantes est comprise entre 0,01 % et 1 % massique, plus préférentiellement entre 0,1 et 0,5% massique, par rapport à la masse totale la composition.

Un autre objet de l'invention concerne l'utilisation d'une émulsion inverse EMI 1 ou EMI 3 obtenue par le procédé selon l'invention pour améliorer les propriétés assouplissantes d'une composition assouplissante pour textile.

Les émulsions inverses EMI 1 ou EMI 3 obtenues selon le procédé de l'invention permettent d'obtenir une combinaison de (co)polymères ioniques (charges cationiques et éventuellement anioniques) stables ainsi qu'une facilité d'utilisation et d'incorporation de ces (co)polymères lors de la fabrication de compositions détergentes ou cosmétiques ou assouplissantes.

En plus des avantages ci-dessus, les (co)polymères compris dans les émulsions inverses EMI 1 ou de EMI 3 obtenues selon le procédé de l'invention offrent de meilleures performances assouplissantes que s'ils étaient employés et ajoutés séparément dans des compositions détergentes ou cosmétiques.

Le procédé selon l'invention n'est pas limité au domaine des détergents et de la cosmétique. On peut trouver des applications au procédé selon l'invention dans tout domaine où il est envisageable d'ajouter deux produits en un pour faciliter l'utilisation, en particulier dans l'industrialisation.

L'invention et les avantages qui en découlent ressortiront mieux des figures et exemples suivants donnés afin d'illustrer l'invention et non de manière limitative.

### FIGURES

La figure 1 est un graphique montrant les résultats du test panel après un lavage, entre un ajout séparé des copolymères 1 et 3 dans la composition et l'ajout de l'émulsion selon le procédé de l'invention (avec et sans l'étape de distillation).
La figure 2 est un graphique montrant les résultats du test panel après cinq lavages, entre un ajout séparé des copolymères 1 et 3 dans la composition et l'ajout de l'émulsion selon le procédé de l'invention (avec et sans l'étape de distillation).
La figure 3 est un graphique montrant les résultats du test panel après un lavage, entre un ajout séparé des copolymères 2 et 3 dans la composition et l'ajout de l'émulsion selon le procédé de l'invention (avec et sans l'étape de distillation).
La figure 4 est un graphique montrant les résultats du test panel après cinq lavages, entre un ajout séparé des copolymères 2 et 3 dans la composition et l'ajout de l'émulsion selon le procédé de l'invention (avec et sans l'étape de distillation).
La figure 5 est un graphique montrant l'effet moelleux sur les serviettes des émulsions selon le procédé de l'invention.

### EXEMPLES

DADMAC = Chlorure de diméthyldiallylammonium
AA = Acide Acrylique
ACM = Acrylamide
M-PEG2000 = Méthoxy polyéthylène glycol 2000
MADAME = Méthacrylate de diméthylaminoéthyle

### A/ Préparation des copolymères hydrosolubles A et B

### Préparation du copolymère hydrosoluble A sous forme de solution aqueuse :

### • Copolymère DADMAC/Acrylamide (Polymère A-1)

Le copolymère A-1 comprend 56.7 % en masse d'Acrylamide et 43.3 % en masse de DADMAC.

Dans un réacteur équipé d'un système d'agitation mécanique, d'un condenseur, d'un thermomètre et d'une arrivée d'azote, on charge :
89 g d'Acrylamide (Flocryl Acrylamide 50% massique dans l'eau, SNF) ;
53 g de DADMAC (Flocryl 4007 Q 64% massique dans l'eau, SNF) ;
785 g d'eau.

Le milieu est désoxygéné avec un flux d'azote, et chauffé à 50°C.

Séparément, on prépare deux solutions d'initiateurs, qui sont ensuite additionnés au milieu :

Solution 1 : 1 g de persulfate de sodium dans 10g d'eau.

Solution 2 : 1 g de métabisulfite de sodium dans 100g d'eau.

Le milieu est maintenu pendant une heure à cette température pour compléter la polymérisation.

On laisse le mélange revenir à température ambiante, puis on ajuste le pH entre 3.8 et 4.3 en utilisant une solution aqueuse de NaOH ou d'acide citrique à 50% en masse.

Le produit obtenu est une solution aqueuse dont la concentration en copolymère A-1 est de 9.4% en masse par rapport à la masse de solution. La solution présente une viscosité de 9300 cPs (Brookfield RVT, module 4, 10 rpm, 25°C). Le copolymère A-1 a une masse molaire moyenne en masse de 1 400 000 g/mol.

En suivant le même protocole, différents copolymères hydrosolubles (A-2 à A-5) ont été synthétisés. L'ensemble des compositions des différents copolymères hydrosolubles A est donné dans le tableau suivant :

**Tableau 1 : Récapitulatif des compositions des copolymères hydrosolubles A.**

| | ACM % | DADMAC % | AA % | M-PEG 2000 % | Concentration de la solution (% en masse de copolymère A) |
|---|---|---|---|---|---|
| Copolymère A-1 | 43,3 | 56,7 | - | - | 9,4% |
| Copolymère A-2 | - | 80 | 20 | - | 40,5% |
| Copolymère A-3 | 75 | 25 | - | - | 39,9% |
| Copolymère A-4 | 29 | 48 | 23 | - | 44% |
| Copolymère A-5 | 68,1 | 27,4 | - | 4,5 | 10,2% |

### Préparation du copolymère hydrosoluble B sous forme d'émulsion inverse EMI 2 :

### • Copolymère MADAME/Acrylamide (Polymère B-1)

Le copolymère B-1 comprend 92 % en masse de MADAME/MeCl et 8 % en masse d'Acrylamide.

On charge dans un bécher de IL sous agitation magnétique les ingrédients de la phase aqueuse :
468g de MADAME/MeCI (Flocryl MADAME/MeCl 75% massique dans l'eau, SNF) ;
60g d'Acrylamide (Flocryl Acrylamide 50% massique dans l'eau, SNF) ;
130g d'eau ;
0.191g de méthylènebisacrylamide ;
0.08g de diéthylènetriaminepentacétate de sodium (Versenex 80).

Ensuite dans un réacteur de verre de 1L, sous agitation mécanique, la phase organique est préparée avec :
206g d'huile minérale blanche ;
64g d'hydrocarbure aliphatique ;
20g de monooléate de sorbitol ;
5g de polymère stabilisant.

La phase aqueuse est transférée dans la phase organique. La pré-émulsion ainsi formée est alors soumise à fort cisaillement pendant 1 minute (Ultra Turrax, IKA).

L'émulsion inverse est alors dégazée pendant 30 minutes grâce à un simple barbotage d'azote.

La polymérisation est réalisée par addition d'un couple redox de métabisulfite de sodium et d'hydroperoxyde de tert-butyle en solution dans l'eau.

Après avoir atteint la température maximale (polymérisation adiabatique), l'émulsion est maintenue 1h à 65°C.

On laisse le mélange revenir à la température ambiante pour obtenir l'émulsion inverse EMI2.

L'émulsion inverse EMI 2 est un liquide opaque dont la concentration en copolymère B-1 est de 38% massique par rapport à la masse de l'émulsion. L'émulsion inverse EMI 2 présente une viscosité de 640cPs (Brookfield LVT, module 3, 30rpm).

### B/ Préparation de l'émulsion inverse EMI 1 selon l'invention

### Protocole de mélange :

Dans un bécher de 1L, à température ambiante, on introduit 450g de l'émulsion inverse EMI 2. Sous agitation (tripale, 600rpm), on ajoute 50g de copolymère A-2 et on agite pendant 15 minutes à 600 rpm.

EMI 1 obtenue est un liquide opaque dont la concentration totale en copolymère (A-2 + B-1) est de 38.3% massique par rapport à la masse de solution. La solution présente une viscosité de 760cPs (Brookfield LVT, module 3, 30rpm, 25°C).

Différentes émulsions inverses EMI 1 sont réalisées avec le même protocole, à partir des copolymères hydrosolubles A synthétisés précédemment.

Pour une utilisation directe (sans étape de distillation), il est nécessaire d'ajouter un tensioactif inverseur. Dans ce cas, 60g d'alcool tridécylique éthoxylé (6 moles) sont donc ajoutés.

### C/ Préparation de l'émulsion inverse EMI 3 selon l'invention

### Protocole de distillation :

Dans un ballon de 1L, on introduit 277g de EMI 1. Cette dernière est distillée à l'aide d'un évaporateur rotatif avec un bain à 90°C avec une rotation de 60rpm en abaissant la pression jusqu'à 80mbar.

Après distillation, 176.82g sont obtenus, on ajoute alors 10.61g d'alcool tridécylique éthoxylé (6 moles) comme agent inverseur afin d'obtenir l'émulsion inverse EMI 3.

Différentes émulsions inverses EMI 3 sont réalisées avec le même protocole à partir des émulsions inverses EMI 1 préparées précédemment.

Le produit obtenu est un liquide opaque dont la concentration totale en copolymère (A-2 + B-1) est de 56.6% massique par rapport à la masse de solution. La solution présente une viscosité de 1920 cPs (Brookfield LVT, module 3, 30rpm, 25°C).

### Test de viscosité :

Le mesure de la viscosité se fait à l'aide d'un viscosimètre Brookfield LVT, avec un module 3 à 30 rpm, à 25°C.

A concentrations identiques, la viscosité des solutions de copolymères hydrosolubles A est plus importante que celles de copolymères hydrosolubles B, et donc la plus gênante lors de la fabrication de compositions. Aussi, la viscosité des solutions aqueuses de copolymères A est comparée à la viscosité des émulsions inverses EMI 1 obtenues selon l'invention pour apprécier l'efficacité du procédé selon l'invention pour réduire la viscosité sans altérer les propriétés des copolymères.

On mesure également les viscosités des émulsions inverses EMI 3 obtenues selon l'invention (tableau 2).

**Tableau 2 : Récapitulatif des viscosités.**

| Copolymère | Viscosité des solutions aqueuses de copolymères A (cPs) | Viscosité Émulsions EMI 1 (cPs) | **Réduction de la viscosité (%)** | Viscosité Émulsions EMI 3 (cPs) | **Réduction de la viscosité (%)** | Ratio massique B-1/A |
|---|---|---|---|---|---|---|
| A-1 | 9300 | 640 | **93** | 1500 | **83** | 8,89 |
| A-2 | 6500 | 760 | **89** | 1920 | **70** | 8,55 |
| A-3 | 5000 | 1160 | **76** | 2960 | **40** | 6,4 |
| A-4 | 2800 | 936 | **66** | 1480 | **47** | 7,0 |
| A-5 | 8500 | 5800 | **31** | 1880 | **77** | 11,2 |

Le procédé selon l'invention permet d'obtenir des émulsions inverses stables de copolymères qui, s'ils sont ajoutés séparément, sont généralement incompatibles.

Outre cette compatibilité, la viscosité du mélange est nettement inférieure à celle du copolymère en solution, avec une viscosité réduite entre 40% et 83% après distillation.

Cette réduction de viscosité est encore plus forte sans l'étape de distillation, avec une réduction allant de 66% à 91%.

Cette importante réduction de viscosité simplifie l'utilisation des copolymères A et B lors des procédés de formulation de compositions détergentes ou cosmétiques, notamment pour les étapes de dépotage, le stockage et le dosage.

Grace à l'invention et l'ajout 2 en 1 de ces copolymères, on a également un gain de place sur les installations et une réduction de la logistique.

L'énergie utilisée pour pomper les produits est également bien moindre dans le cadre de l'invention et permet une réduction de l'empreinte écologique.

En plus de tous ces avantages, il a été découvert de façon surprenante, que l'effet adoucissant du mélange des copolymères obtenus selon le procédé de l'invention est accru par rapport l'effet obtenu lorsque les copolymères sont ajoutés séparément (les copolymères ne forment pas un produit 2 en 1) dans une composition. Cet effet est encore augmenté grâce à l'étape de distillation.

### Tests panel douceur :

Des tests de douceur (effet assouplissant) ont été réalisés par un laboratoire indépendant.

Cette méthode permet d'apprécier, à l'aide d'un panel sensoriel (semi expérimenté), la douceur apportée par le produit sur le textile en coton. Les serviettes sont lavées en machine à 60°C.

Après un cycle (lavage + assouplissement), les serviettes sont mises à sécher à l'air libre sur un étendoir ménager pendant une nuit dans une salle climatisée, puis jugées par un panel de 20 personnes. A l'issu du panel, les serviettes sont lavées 4 fois de suite (lavage + assouplissement + séchage) et étendues comme décrit précédemment afin d'effectuer le 2^{ème} panel après 5 lavages itératifs (5 cycles de lavage + assouplissement + séchage).

Un traitement statistique des résultats est effectué permettant de conclure sur la significativité des écarts observés.

Si le nombre de produits à tester est supérieur à trois, alors la norme ISO 8587 est appliquée. Pour deux ou trois produits, la norme ISO 5495 est utilisée pour le traitement des données.

### Protocole de mélange :

### Méthode d'ajout séparé des copolymères hydrosolubles A et B :

Sous agitation, l'émulsion inverse EMI 2, comprenant le copolymère hydrosoluble B est additionnée à la composition assouplissante Minidou^{®} boufée d'air frais, le mélange est maintenu pendant 15 minutes sous agitation avant l'addition de la solution aqueuse A de copolymères hydrosolubles A. L'ensemble est maintenu pendant 15 minutes sous agitation.

Les compositions ci-dessous sont ainsi obtenues :
*Composition 1* : La solution aqueuse de copolymères A-1 et l'émulsion inverse EMI 2 sont ajoutées séparément.
*Composition 2 :* Emulsion inverse EMI 1 des copolymères hydrosolubles A-1 et B-1 selon l'invention.
*Composition 3 :* Emulsion inverse EMI 3 des copolymères hydrosolubles A-1 et B-1 selon l'invention.
*Composition 4 :* La solution aqueuse de copolymères A-2 et l'émulsion inverse EMI 2 sont ajoutées séparément.
*Composition 5 :* Emulsion inverse EMI 1 des copolymères hydrosolubles A-2 et B-1 selon l'invention.
*Composition 6 :* Emulsion inverse EMI 3 des copolymères hydrosolubles A-2 et B-1 selon l'invention.

### Résultats des tests panel douceur pour les compositions 1 à 3 :

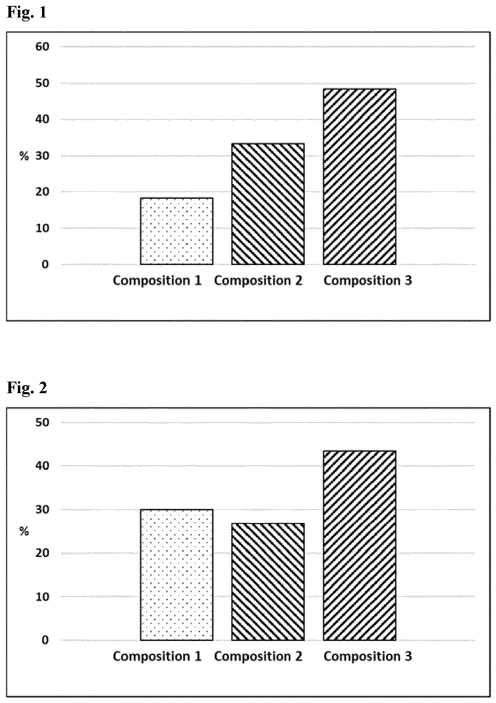

**Tableau 3 : Distribution (pourcentage, %) des choix du panel lors du test douceur après 1 et 5 lavages pour les compositions 1 à 3 (figures 1 et 2).**

| | % de personnes ayant choisi la Composition 1 | % de personnes ayant choisi la Composition 2 | % de personnes ayant choisi la Composition 3 |
|---|---|---|---|
| 1 lavage | 18,3 | 33,3 | 48,3 |
| 5 lavages | 30,0 | 26,7 | 43,3 |

Les compositions 2 et 3 obtenues selon le procédé de l'invention représentent 81,6% des choix du panel pour leur préférence douceur après un seul lavage.

L'étape de distillation renforce cet effet adoucissant, avec presque la moitié des panelistes choisissant les serviettes lavées avec la composition 3.

Les compositions comprenant les copolymères obtenus selon le procédé de l'invention représentent 70% des choix du panel pour leur préférence douceur après 5 lavages.

Avec encore une fois le renforcement du côté doux de la serviette après l'étape de distillation avec presque 45% des participants sélectionnant la composition 3.

### Résultats des tests panel douceur pour les compositions 4 à 6 :

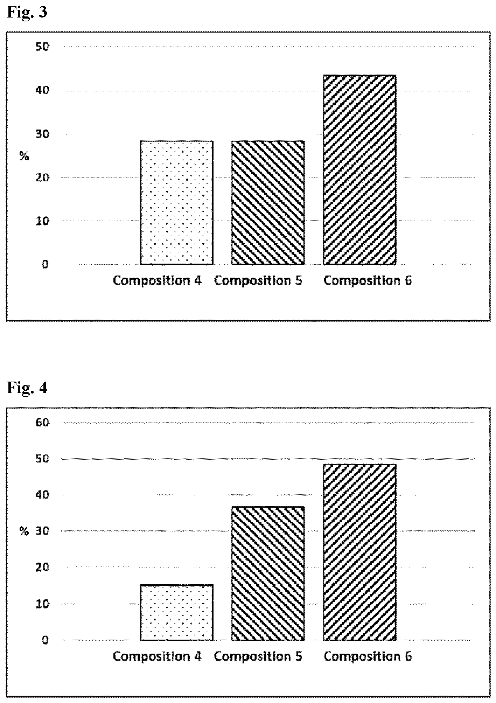

**Tableau 4 : Distribution des choix du panel lors du test douceur après 1 et 5 lavages pour les compositions 4 à 6 (figures 3 et 4).**

| | % de personnes ayant choisi la Composition 4 | % de personnes ayant choisi la Composition 5 | % de personnes ayant choisi la Composition 6 |
|---|---|---|---|
| 1 lavage | 28,3 | 28,3 | 43,3 |
| 5 lavages | 15,0 | 36,7 | 48,3 |

Les compositions 5 et 6 comprenant les copolymères obtenus selon le procédé de l'invention représentent 71,6% des choix du panel pour leur préférence douceur après un seul lavage.

L'étape de distillation renforce cet effet adoucissant, avec presque 45% des panelistes choisissant les serviettes lavées avec la composition 6.

Les compositions comprenant les copolymères obtenus selon le procédé de l'invention représentent 85% des choix du panel pour leur préférence douceur après 5 lavages.

L'étape de distillation renforce cet effet adoucissant, avec presque la moitié des panelistes choisissant les serviettes lavées avec la composition 3.

### Test moelleux des serviettes :

Un aspect important pour le consommateur est l'effet moelleux des serviettes, il est mesuré en prenant la hauteur d'empilement de 20 serviettes. On prend la mesure avant lavage, après un premier lavage et après 5 lavages afin de comparer l'aspect moelleux des serviettes.

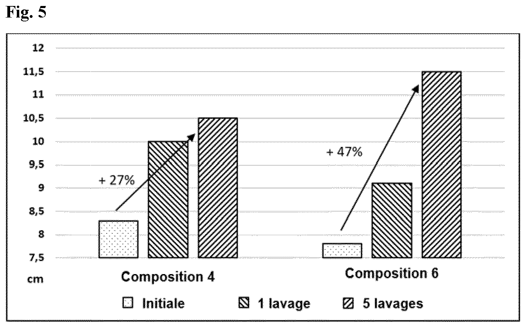

**Tableau 5 : Comparaison de la mesure de la hauteur d'empilement de 20 serviettes lavées avec un ajout séparé et les copolymères obtenus selon le procédé de l'invention (figure 5).**

| | **Composition 4** | **Gains** | **Composition 6** | **Gains** |
|---|---|---|---|---|
| **Avant lavage** | 8,3 | -- | 7,8 | -- |
| **1 lavage** | 10 | +20% | 9,1 | +17% |
| **5 lavages** | 10,5 | +27% | 11,5 | +47% |

On peut voir que le gain d'épaisseur est plus important pour la composition comprenant l'émulsion inverse obtenue selon l'invention avec un gain de presque 50% de hauteur d'empilement après 5 lavages. En ajoutant les copolymères hydrosolubles A et B séparément, le gain est de seulement 27%. Le gain d'épaisseur est doublé grâce à la méthode selon l'invention.

Les lavages successifs améliorent l'effet moelleux grâce à un meilleur dépôt des copolymères adoucissants.

### D/ Réduction de la viscosité

L'émulsion inverse selon l'invention, EMI 1 et EMI 3, a été comparée à une émulsion résultant de la formation du copolymère A, par polymérisation de monomères en présence du copolymère B-1 (procédé comparatif CE).

Le procédé comparatif CE est similaire à celui décrit dans les documents EP 0 262 945, US 8,633,278 ou US2 002/0188040.

Le tableau 6 compare la viscosité des émulsions selon l'invention et selon le procédé comparatif CE, avant et après distillation.

**Tableau 6 : Comparaison de la viscosité d'émulsions obtenues selon le procédé de l'invention ou selon le procédé comparatif CE.**

| Copolymère | Procédé | Viscosité (cPs) avant distillation | Viscosité (cPs) après distillation | Ratio massique B-1/A |
|---|---|---|---|---|
| A-1 | Invention | 640 (EMI 1) | 2400 (EMI 3) | 11,8 |
| | CE | 760 (CE-1) | 3080 (CE-1dist) | 29,4 |
| A-2 | Invention | 640 (EMI 1) | 2400 (EMI 3) | 6,1 |
| | CE | 1240 (CE-2) | 3720 (CE-2dist) | 6,7 |

Le copolymère A-1 est un copolymère de 43,3 % en masse d'ACM (acrylamide) et de 56,7 % en masse de DADMAC (chlorure de diméthyldiallylammonium). Le copolymère B-1 est un copolymère de 92 % en masse de MADAME/MeCl (méthacrylate de diméthylaminoéthyle quaternisé avec le chlorure de méthyle) et de 8 % en masse d'ACM. A concentrations identiques, la viscosité des solutions de copolymères hydrosolubles A est plus importante que celle de copolymères hydrosolubles B, et reste donc la plus gênante lors de la préparation de compositions.

Les émulsions EMI 1 et EMI 3 ont été préparées selon les parties B/ et C/ ci-dessus.

Le procédé CE consiste à préparer les émulsions CE-1 et CE-2 par polymérisation, en émulsion inverse, de 43,3 % en masse d'ACM et de 56,7 % en masse de DADMAC (chlorure de diméthyldiallylammonium) en présence du copolymère B-1. Les émulsions CE-ldist et CE-2dist ont été préparées selon le protocole de distillation de la partie C/ ci-dessus.

Selon les données du tableau 6, l'émulsion inverse obtenue selon l'invention (EMI 1 ou EMI 3) présente une viscosité (640 ou 2400 cps) inférieure à celle de la composition selon le procédé comparatif CE (760 ou 3080 cps) et ce, même si elle présente un ratio massique copolymère B-1/copolymère A plus important (11,8 vs 29,4). Il est ainsi possible, grâce à l'invention, d'augmenter la concentration en copolymère sans engendrer de problème de viscosité.

D'autre part, à ratio en copolymère similaire (ratio B-1/A = 6,1 ou 6,7), la viscosité de l'émulsion inverse selon l'invention (640 ou 2400 cps) est nettement inférieure à celle d'une composition selon le procédé comparatif CE (1240 ou 3720 cps).

Ainsi, ces essais montrent que le procédé selon l'invention permet de résoudre le problème lié à la manipulation de polymères visqueux.

En effet, la préparation d'une émulsion inverse selon le procédé de l'invention permet, à quantité constante de polymère, de diminuer la viscosité et donc de faciliter l'utilisation de copolymères aux propriétés viscosifiantes.

## Revendications

1. Procédé de préparation d'une émulsion inverse EMI 1 comprenant l'étape suivante : formation d'une émulsion inverse EMI 1 par mélange d'une solution aqueuse de (co)polymère hydrosoluble A d'au moins un monomère cationique et d'une émulsion inverse EMI 2 de (co)polymère hydrosoluble B d'au moins un monomère cationique.

2. Procédé de préparation d'une émulsion inverse selon la revendication 1, ***caractérisé* en ce que** les (co)polymères hydrosolubles A et B sont des (co)polymères synthétiques obtenus, indépendamment l'un de l'autre, à partir d'au moins un monomère cationique et d'au moins un monomère non ionique et/ou d'au moins un monomère anionique.

3. Procédé de préparation d'une émulsion inverse selon la revendication 1 ou 2, ***caractérisé* en ce que** les (co)polymères hydrosolubles A et B sont, indépendamment l'un de l'autre, des (co)polymères synthétiques d'au moins un monomère cationique choisi parmi l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), le chlorure de méthacrylamido propyltriméthyl ammonium (MAPTAC), et leurs mélanges.

4. Procédé de préparation d'une émulsion inverse selon l'une des revendications 1 à 3, ***caractérisé* en ce que** le (co)polymère hydrosolubles A et le (co)polymère hydrosoluble B sont, indépendamment l'un de l'autre, des (co)polymères :
- d'au moins un monomère cationique, et
- d'au moins un monomère non ionique et/ou d'au moins un monomère anionique,
le monomère non ionique étant choisi parmi l'acrylamide, le méthacrylamide, le N-isopropylacrylamide, le N,N-diméthylacrylamide et le N-méthylolacrylamide, la N-vinylformamide, le N-vinyl acétamide, la N-vinylpyridine et la N-vinylpyrrolidone, l'acryloyl morpholine (ACMO), la diacétone acrylamide, et leurs mélanges.

5. Procédé de préparation d'une émulsion inverse selon l'une des revendications 1 à 4, ***caractérisé* en ce que** le (co)polymère hydrosolubles A et le (co)polymère hydrosoluble B sont, indépendamment l'un de l'autre, des (co)polymères :
- d'au moins un monomère cationique, et
- d'au moins un monomère anionique et/ou d'au moins un monomère non ionique le monomère anionique étant choisi parmi l'acide acrylique, l'acide méthacrylique, l'acide itaconique, l'acide maléique, l'acide 2-acrylamido-2-méthylpropane sulfonique (ATBS), l'acide vinylsulphonique, l'acide vinylphosphonique et leurs mélanges, ledit monomère anionique étant non salifié, partiellement ou totalement salifié, et les sels du méthacrylate de 3-sulfopropyle.

6. Procédé de préparation d'une émulsion inverse selon l'une des revendications 1 à 5, ***caractérisé* en ce que** le (co)polymère hydrosoluble A est un (co)polymère hydrosoluble synthétisé à partir d'au moins un monomère cationique et d'au moins un monomère anionique, le (co)polymère hydrosoluble A ayant une charge globale cationique.

7. Procédé de préparation d'une émulsion inverse selon l'une des revendications 1 à 6, ***caractérisé* en ce que** le (co)polymère hydrosoluble B est un (co)polymère hydrosoluble réticulé.

8. Procédé de préparation d'une émulsion inverse selon l'une des revendications 1 à 7, ***caractérisé* en ce que** l'émulsion inverse EMI 1 comprend une concentration totale en (co)polymères hydrosolubles A et B comprise entre 5 et 50 % massique par rapport à la masse totale de l'émulsion inverse EMI 1.

9. Procédé de préparation d'une émulsion inverse selon l'une des revendications 1 à 8, ***caractérisé* en ce que** le procédé comprend une étape subséquente de formation d'une émulsion inverse EMI 3 par distillation de l'émulsion inverse EMI 1.

10. Procédé de préparation d'une émulsion inverse selon l'une des revendications 1 à 9, ***caractérisé* en ce que** le procédé comprend une étape subséquente de formation d'une émulsion inverse EMI 3 par distillation de l'émulsion inverse EMI 1, l'émulsion inverse EMI 3 présentant une concentration totale en (co)polymères hydrosolubles A et B comprise entre 20 et 80% massique par rapport à la masse totale de l'émulsion inverse EMI 3.

11. Procédé de préparation d'une émulsion inverse selon l'une des revendications 1 à 10, ***caractérisé* en ce que** le procédé comprend une étape subséquente de formation d'une émulsion inverse EMI 3 par distillation de l'émulsion inverse EMI 1, l'émulsion inverse EMI 3 présentant une concentration totale en (co)polymères hydrosolubles A et B comprise entre 35 et 60% massique par rapport à la masse totale de l'émulsion inverse EMI 3.

12. Procédé de préparation d'une émulsion inverse selon l'une des revendications 1 à 11, ***caractérisé* en ce que** l'émulsion inverse EMI 1 ou EMI 3 présente un ratio massique entre le (co)polymère hydrosoluble B et le (co)polymère hydrosoluble A compris entre 1 et 100, préférentiellement entre 2 et 70, plus préférentiellement entre 3 et 50, encore plus préférentiellement entre 4 et 30, et encore plus préférentiellement entre 5 et 14.

13. Composition détergente ou cosmétique ou assouplissante pour le textile, comprenant une émulsion inverse EMI 1 ou EMI 3 obtenue selon l'une des revendications 1 à 12.

14. Composition selon la revendication 13, **caractérisée en ce que** ladite composition présente une quantité totale de (co)polymères hydrosolubles A et B comprise entre 0,01 et 1% massique, par rapport à la masse totale la composition.

15. Utilisation d'une émulsion inverse EMI 1 ou EMI 3, obtenue par le procédé selon l'une des revendications 1 à 12 pour améliorer les propriétés assouplissantes d'une composition assouplissante pour textile.

## Patentansprüche

1. Verfahren zur Herstellung einer inversen Emulsion EMI 1, umfassend den folgenden Schritt: Bildung einer inversen Emulsion EMI 1 durch Mischen einer wässrigen Lösung, eines wasserlöslichen (Co)polymers A, aus mindestens einem kationischen Monomer und einer inversen EMI2-Emulsion, umfassend ein wasserlösliches (Co)polymer aus mindestens einem kationischen Monomer, optional gefolgt von einer Destillation.

2. Verfahren zur Herstellung einer inversen Emulsion nach Anspruch 1, ***dadurch gekennzeichnet, dass*** die wasserlöslichen (Co)polymere A et B synthetisierte (Co)polymere sind, die unabhängig voneinander aus mindestens einem kationischen Monomer und mindestens einem nichtionischen Monomer und/ oder mindestens einem anionischen Monomer synthetisiert werden.

3. Verfahren zur Herstellung einer inversen Emulsion nach Anspruch 1 oder 2, ***dadurch gekennzeichnet, dass*** die wasserlöslichen (Co)polymere A und B unabhängig voneinander synthetisierte (Co)polymere sind, aus mindestens einem kationischen Monomer, ausgewählt aus quaternisiertem Dimethylaminoethylacrylat (ADAME), quaternisiertem Dimethylaminoethylmethacrylat (MADAME), Dimethyldiallylammoniumchlorid (DADMAC), Acrylamidpropyltrimethylammoniumchlorid (APTAC), Methacrylamidpropyltrimethylammoniumchlorid (MAPTAC), und ihren Mischungen.

4. Verfahren zur Herstellung einer inversen Emulsion nach einem der Ansprüche 1 bis 3, ***dadurch gekennzeichnet, dass*** das wasserlösliche (Co)polymer A und das wasserlösliche (Co)polymer B unabhängig voneinander (Co)polymere sind aus:
- mindestens einem kationischen Monomer, und
mindestens einem nicht-ionischen Monomer und/ oder mindestens einem anionischen Monomer,
das nicht-ionische Monomer wird dabei ausgewählt aus Acrylamid, Methacrylamid, N-isopropylacrylamid, N,N-dimethylacrylamid und N-methylolacrylamid, N-vinylformamid, N-vinylacetamid, N-vinylpyridin und N-vinylpyrrolidon, Acryloylmorpholin (ACMO), Diacetonacrylamid, und ihren Mischungen.

5. Verfahren zur Herstellung einer inversen Emulsion nach einem der Ansprüche 1 bis 4, ***dadurch gekennzeichnet, dass*** das wasserlösliche (Co)polymer A und das wasserlösliche (Co)polymer B unabhängig voneinander (Co)polymere sind aus:
- mindestens einem kationischen Monomer, und
- mindestens einem anionischen Monomer und/ oder mindestens einem nicht-ionischen Monomer
das anionische Monomer wird ausgewählt aus Acrylsäure, Methacrylsäure, Itaconsäure, Maleinsäure, 2-Acrylamido-2-methylpropansulfonsäure (ATBS), Vinylsulfonsäure, Vinylphosphonsäure und ihren Mischungen, wobei dieses anionische Monomer nicht versalzt, teilweise versalzt oder vollständig versalzt ist, sowie die 3-sulfopropylmethacrylatsalze.

6. Verfahren zur Herstellung einer inversen Emulsion nach einem der Ansprüche 1 bis 5, ***dadurch gekennzeichnet, dass*** es sich bei dem wasserlöslichen (Co)polymer A um ein wasserlösliches (Co)polymer handelt, das synthetisiert ist, ausgehend von mindestens einem kationischen Monomer und mindestens einem anionischen Monomer, das wasserlösliche (Co)polymer A hat dabei eine kationische Gesamtladung.

7. Verfahren zur Herstellung einer inversen Emulsion nach einem der Ansprüche 1 bis 6, ***dadurch gekennzeichnet, dass*** es sich bei dem wasserlöslichen (Co)polymer B um ein vernetztes wasserlösliches (Co)polymer handelt.

8. Verfahren zur Herstellung einer inversen Emulsion nach einem der Ansprüche 1 bis 7, ***dadurch gekennzeichnet, dass*** die inverse Emulsion eine Gesamtkonzentration an wasserlöslichen (Co)polymeren A und B zwischen 5 und 50 Masse-% bezogen auf die Gesamtmasse der inversen Emulsion EMI 1 enthält.

9. Verfahren zur Herstellung einer inversen Emulsion nach einem der Ansprüche 1 bis 8, ***dadurch gekennzeichnet, dass*** das Verfahren einen folgenden Schritt der Bildung einer inversen Emulsion EMI 3 durch Destillation der inversen Emulsion EMI 1 enthält.

10. Verfahren zur Herstellung einer inversen Emulsion nach einem der Ansprüche 1 bis 9, ***dadurch gekennzeichnet, dass*** das Verfahren einen folgenden Schritt der Bildung einer inversen Emulsion EMI 3 durch Destillation der inversen Emulsion EMI 1 enthält, die inverse Emulsion EMI 3 weist dabei eine Gesamtkonzentration an wasserlöslichen (Co)polymeren A und B zwischen 20 und 80 Masse-% bezogen auf die Gesamtmasse der inversen Emulsion EMI 3 auf.

11. Verfahren zur Herstellung einer inversen Emulsion nach einem der Ansprüche 1 bis 10, ***dadurch gekennzeichnet, dass*** das Verfahren einen folgenden Schritt der Bildung einer inversen Emulsion EMI 3 durch Destillation der inversen Emulsion EMI 1 enthält, die inverse Emulsion EMI 3 weist dabei eine Gesamtkonzentration an wasserlöslichen (Co)polymeren A und B zwischen 35 und 60 Masse-% bezogen auf die Gesamtmasse der inversen Emulsion EMI 3 auf.

12. Verfahren zur Herstellung einer inversen Emulsion nach einem der Ansprüche 1 bis 11, ***dadurch gekennzeichnet, dass*** die inverse Emulsion EMI 1 oder EMI 3 ein Masseverhältnis des wasserlöslichen (Co)polymers B und des wasserlöslichen (Co)polymers A zwischen 1 und 100 aufweist, vorzugsweise zwischen 2 und 70, noch besser zwischen 3 und 50, sogar noch besser zwischen 4 und am besten zwischen 5 und 14.

13. Reinigungs- oder kosmetische Zusammensetzung oder Weichspüler für Textilien, umfassend eine inverse Emulsion EMI1 oder EMI 3, hergestellt nach einem der Ansprüche 1 bis 12.

14. Zusammensetzung nach Anspruch 13, **dadurch gekennzeichnet, dass** diese Zusammensetzung eine Gesamtmenge an wasserlöslichen (Co)polymeren A und B enthält, die zwischen 0,01 et 1 Masse-% bezogen auf die Gesamtmasse der Zusammensetzung enthalten.

15. Verwendung einer inversen Emulsion EMI 1 oder EMI 3, hergestellt durch das Verfahren nach 10 einem der Ansprüche 1 bis 12 zur Verbesserung der weichspülenden Eigenschaften einer Weichspülerzusammensetzung für Textilien.

## Claims

1. Process for preparing an inverse EMI 1 emulsion comprising the following step:
Forming an inverse EMI 1 emulsion by mixing an aqueous solution of water-soluble (co)polymer A of at least one cationic monomer and an inverse EMI 2 emulsion of water-soluble (co)polymer B of at least one cationic monomer.

2. Process for the preparation of an inverse emulsion according to claim 1, ***characterized* in that** water-soluble (co)polymers A and B are synthetic (co)polymers obtained, independently of each other, from at least one cationic monomer and at least one non-ionic monomer and/or of at least one anionic monomer.

3. Process for the preparation of an inverse emulsion according to claim 1 or 2, ***characterized* in that** water-soluble (co)polymers A and B are, independently of each other, synthetic (co)polymers of at least one cationic monomer selected from quaternized dimethylaminoethyl acrylate (ADAME), quaternized dimethylaminoethyl methacrylate (MADAME), dimethyldiallylammonium chloride (DADMAC), acrylamido propyltrimethyl ammonium chloride (APTAC), methacrylamido propyltrimethyl ammonium chloride (MAPTAC), and mixtures thereof.

4. Process for the preparation of an inverse emulsion according to one of claims 1 to 3, ***characterized* in that** water-soluble (co)polymer A and water-soluble (co)polymer B are, independently of each other, (co)polymers:
- of at least one cationic monomer, and
- of at least one non-ionic monomer and/or at least one anionic monomer,
the non-ionic monomer being chosen from acrylamide, methacrylamide, N-isopropylacrylamide, N,N-dimethylacrylamide and N-methylolacrylamide, N-vinylformamide, N-vinyl acetamide, N-vinylpyridine and N-vinylpyrrolidone, acryloyl morpholine (ACMO), diacetone acrylamide, and mixtures thereof.

5. Process for the preparation of an inverse emulsion according to one of claims 1 to 4, ***characterized* in that** water-soluble (co)polymer A and water-soluble (co)polymer B are, independently of each other, (co)polymers:
- of at least one cationic monomer, and
- of at least one anionic monomer and/or at least one non-ionic monomer
the anionic monomer chosen from acrylic acid, methacrylic acid, itaconic acid, maleic acid, 2-acrylamido-2-methylpropane sulfonic acid (ATBS), vinylsulfonic acid, vinylphosphonic acid and mixtures thereof, said anionic monomer being non-salified, partially or totally salified, and the salts of 3-sulfopropyl methacrylate.

6. Process for the preparation of an inverse emulsion according to one of claims 1 to 5, ***characterized* in that** water-soluble (co)polymer A is a water-soluble (co)polymer synthesized from at least one cationic monomer and from at least one anionic monomer, water-soluble (co)polymer A having an overall cationic charge.

7. Process for the preparation of an inverse emulsion according to one of claims 1 to 6, ***characterized* in that** water-soluble (co)polymer B is a cross-linked water-soluble (co)polymer.

8. Process for the preparation of an inverse emulsion according to one of Claims 1 to 7, ***characterized* in that** the inverse EMI 1 emulsion comprises a total concentration of water-soluble (co)polymers A and B of between 5 and 50% weight relative to the total weight of the inverse EMI 1 emulsion.

9. Process for the preparation of an inverse emulsion according to one of Claims 1 to 8, ***characterized* in that** the process comprises a subsequent step of forming an inverse EMI 3 emulsion by distillation of the inverse EMI 1 emulsion.

10. Process for the preparation of an inverse emulsion according to one of claims 1 to 9, ***characterized* in that** the process comprises a subsequent step of forming an inverse EMI 3 emulsion by distillation of the inverse EMI 1 emulsion, the inverse EMI 3 emulsion with a total concentration of water-soluble (co)polymers A and B of between 20 and 80% by weight relative to the total weight of the inverse EMI 3 emulsion.

11. Process for the preparation of an inverse emulsion according to one of claims 1 to 10, ***characterized* in that** the process comprises a subsequent step of forming an inverse EMI 3 emulsion by distillation of the inverse EMI 1 emulsion, the inverse EMI 3 emulsion having a total concentration of water-soluble (co)polymers A and B of between 35 and 60% by weight relative to the total weight of the inverse EMI 3 emulsion.

12. Process for the preparation of an inverse emulsion according to one of Claims 1 to 11, ***characterized* in that** the inverse EMI 1 or EMI 3 emulsion has a mass ratio between the water-soluble (co)polymer B and water-soluble (co)polymer A between 1 and 100, preferably between 2 and 70, more preferably between 3 and 50, even more preferably between 4 and 30, and even more preferably between 5 and 14.

13. Detergent, cosmetic, or fabric softener composition, comprising an inverse EMI 1 or EMI 3 emulsion obtained according to one of Claims 1 to 12.

14. Composition according to Claim 13, **characterized in that** the said composition has a total quantity of water-soluble (co)polymers A and B of between 0.01 and 1% weight, relative to the total weight of the composition.

15. Use of an EMI 1 or inverse EMI 3 emulsion obtained by the process according to one of Claims 1 to 12 for improving the softening properties of a fabric softening composition.
